(19) Europäisches Patentamt
European Patent Office
Office européen des brevets

(11) **EP 1 653 068 A2**

(12) **DEMANDE DE BREVET EUROPEEN**

(43) Date de publication:
**03.05.2006 Bulletin 2006/18**

(51) Int Cl.:
*F02D 41/30* (2006.01)  *F02D 41/00* (2006.01)
*F02D 41/40* (2006.01)

(21) Numéro de dépôt: **05300832.2**

(22) Date de dépôt: **18.10.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **19.10.2004 FR 0452371**

(71) Demandeur: **Renault s.a.s.**
**92100 Boulogne Billancourt (FR)**

(72) Inventeurs:
• **Hardy, Jean-Paul**
**91410, SAINT CYR SOUS DOURDAN (FR)**
• **Guezet, Jacky**
**91510, JANVILLE SUR JUINE (FR)**

(54) **Procédé de commande d'un moteur comportant une injection de carburant en deux phases**

(57)     L'invention propose un procédé de commande d'un moteur à combustion interne à allumage par auto-inflammation d'un mélange carburé homogène, caractérisé en ce que, au cours d'un cycle de combustion, la quantité totale de carburant nécessaire est introduite au moyen de deux injections distinctes :

- une première injection ($I_1$), qui commence au voisinage du point mort haut du piston, et qui consiste à former un mélange carburé homogène en injectant une première quantité déterminée de carburant avec une pression d'injection et une perméabilité de l'injecteur suffisantes pour former le mélange carburé homogène avant son auto-inflammation,

- une seconde injection ($I_2$), qui commence au début de la combustion du mélange carburé, et qui consiste à injecter une seconde quantité déterminée de carburant ralentissant la vitesse de combustion du mélange carburé formé pendant la première injection ($I_1$).

**Figure unique**

EP 1 653 068 A2

**Description**

La présente invention concerne un procédé de commande d'un moteur à combustion.

L'invention concerne plus particulièrement un procédé de commande d'un moteur à combustion interne à allumage par auto-inflammation d'un mélange carburé homogène, le moteur comportant au moins un cylindre dans lequel un piston se déplace entre une position de point mort bas et une position de point mort haut en délimitant une chambre de combustion de volume variable, et au moins un injecteur qui introduit le carburant directement dans la chambre de combustion du cylindre.

L'invention s'applique, en particulier, aux moteurs du type Diesel à quatre temps.

Les procédés de commande de ce type de moteur utilisent des stratégies d'injection du carburant qui permettent d'atteindre un compromis entre, d'une part, les émissions de polluants tels que des fumées, des oxydes d'azote (NOx), des hydrocarbures (HC), et des monoxydes de carbone (CO) et, d'autre part, le bruit de la combustion, en vue de respecter les normes internationales relatives aux émissions polluantes et au bruit.

Un tel type de procédé de commande est décrit notamment dans le document EP-A-1.279.802.

Dans ce document, le carburant est introduit au moyen de trois injections.

Lors d'une première injection, dite injection pilote, une faible quantité de carburant, inférieure à 5 millimètres cube par coup, est introduite dans la chambre de combustion. Cette première injection a lieu très en avance par rapport au point mort haut du piston, par exemple 100 degrés d'angle de vilebrequin avant le point mort haut.

Lors d'une seconde injection, une quantité importante de carburant est introduite dans la chambre de combustion, de manière à obtenir un mélange quasi homogène entre le carburant, l'air, et des gaz d'échappement recirculés (EGR).

La seconde injection a lieu environ 40 degrés d'angle de vilebrequin avant le point mort haut.

Le mélange homogène subit alors une oxydation lente jusqu'à ce que sa combustion commence.

Pendant l'oxydation lente du mélange homogène, une troisième injection a lieu, qui consiste à introduire une quantité déterminée de carburant de manière à allonger la durée de l'oxydation lente.

Cette solution n'est pas satisfaisante car elle nécessite une diminution du taux de gaz d'échappement recirculés dans la chambre de combustion, pour limiter la production de particules ou de fumées à l'échappement, ce qui pénalise le niveau d'émission des oxydes d'azote.

L'invention vise à proposer un procédé de commande qui permette de réduire fortement les émissions de particules, même avec un taux important de gaz d'échappement recirculés, de manière à réduire simultanément les émissions d'oxydes d'azote.

Dans ce but, l'invention propose un procédé de commande du type décrit précédemment, caractérisé en ce que, au cours d'un cycle de combustion dans le cylindre, la quantité totale de carburant nécessaire est introduite au moyen de deux injections distinctes :

- une première injection, qui commence au voisinage du point mort haut du piston, et qui consiste à former un mélange carburé homogène en injectant une première quantité déterminée de carburant avec une pression d'injection et une perméabilité de l'injecteur suffisantes pour former le mélange carburé homogène avant son auto-inflammation,

- une seconde injection, qui commence au début de la combustion du mélange carburé, et qui consiste à injecter une seconde quantité déterminée de carburant ralentissant la vitesse de combustion du mélange carburé formé pendant la première injection.

Selon d'autres caractéristiques de l'invention :

- la seconde quantité de carburant est inférieure ou égale à 10 millimètres cube par litre de cylindrée unitaire du moteur ;
- la pression d'injection pendant la première injection est supérieure ou égale à 1200 bars ;
- la perméabilité de l'injecteur est supérieure ou égale à une valeur seuil "Qh" exprimée en décimètres cube et calculée selon la formule suivante :

$$Qh \geq \frac{K \times V_{cyl} \times P_{Spec} \times CSE}{n_{cyl} \times \rho \times d \times \sqrt{\Delta P}}$$

dans laquelle :

- "K" est une constante égale à 75,
- "$V_{cyl}$" est la cylindrée du moteur en décimètres cube,
- "$P_{Spec}$" est la puissance maximale du moteur rapportée à sa cylindrée en kilowatts par décimètre cube,
- "CSE" est la consommation spécifique du moteur dans les conditions produisant la puissance maximale en grammes par kilowattheure,
- "$n_{cyl}$" est le nombre de cylindres du moteur,
- "$\rho$" est la masse volumique du carburant en grammes par décimètre cube,
- "d" est la durée d'injection de carburant exprimée en nombre de degrés de rotation du vilebrequin du moteur, dans les conditions produisant la puissance maximale $P_{Spec}$,
- "$\Delta P$" est la pression d'injection du carburant moins la pression dans le cylindre en bars dans les conditions produisant la puissance maximale $P_{Spec}$ ;

- le mélange carburé est formé avec un mélange d'air et de gaz brûlés recirculés ;
- le mélange carburé formé après la seconde injection contient un taux de gaz brûlés recirculés supérieur ou égal à 50 pourcents ;
- le carburant utilisé est du type Diesel.

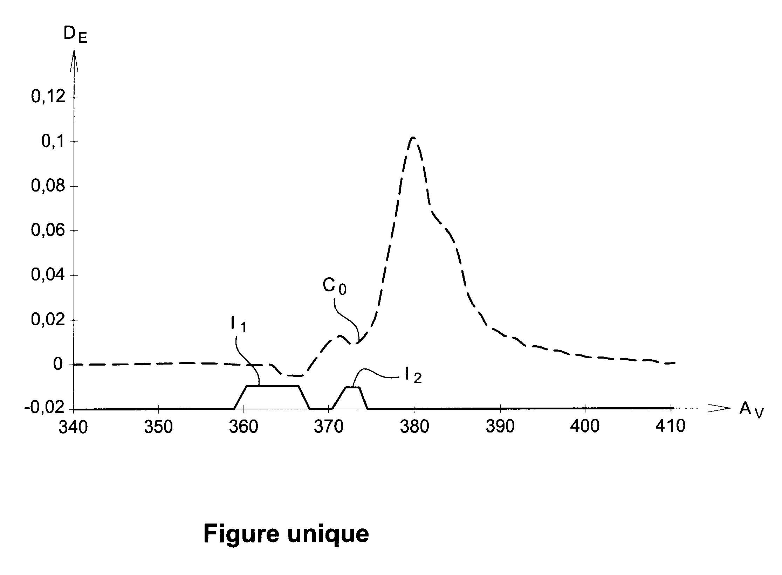

D'autres caractéristiques et avantages de l'invention apparaîtront à la lecture de la description détaillée qui suit pour la compréhension de laquelle on se reportera aux dessins annexés dans lesquels la figure unique illustre un exemple de mise en oeuvre du procédé de commande selon l'invention.

Dans la description qui va suivre, des éléments identiques, similaires ou analogues seront désignés par les mêmes chiffres de référence.

Le procédé de commande selon l'invention s'applique à un moteur à combustion interne à allumage par auto-inflammation d'un mélange carburé homogène.

De préférence, le carburant utilisé est du type Diesel.

De manière connue, le moteur comporte plusieurs cylindres, et dans chaque cylindre un piston coulisse entre une position de point mort bas et une position de point mort haut, délimitant ainsi, avec la culasse du moteur, une chambre de combustion de volume variable.

Le coulissement du piston provoque, par l'intermédiaire d'un système bielle-manivelle, la rotation du vilebrequin du moteur.

Chaque cylindre comporte un injecteur qui débouche directement à l'intérieur de la chambre de combustion du cylindre.

Le moteur fonctionne selon un cycle à quatre temps comportant une phase d'admission, une phase de compression, une phase de détente, et une phase d'échappement.

Conformément aux enseignements de l'invention, au cours d'un cycle de combustion dans le cylindre, la quantité totale de carburant nécessaire est introduite au moyen de deux injections distinctes, décalées dans le temps.

Une première injection $I_1$ commence au voisinage du point mort haut du piston, vers la fin de la phase de compression.

Cette première injection $I_1$ consiste à former un mélange carburé homogène en injectant une première quantité déterminée de carburant. Cette quantité de carburant correspond de préférence à la majeure partie du carburant nécessaire au cycle de combustion.

La valeur de la pression d'injection et la valeur de la perméabilité de l'injecteur sont choisies de manière que la première injection $I_1$ provoque la formation d'un mélange carburé homogène avant l'auto-inflammation du mélange.

A la fin de la première injection $I_1$, la chambre de combustion contient donc un mélange carburé homogène et sa combustion n'a pas encore commencé.

Une seconde injection $I_2$ commence au début de la combustion du mélange carburé homogène, c'est-à-dire quelques degrés d'angle vilebrequin après la fin de la première injection $I_1$.

Cette seconde injection $I_2$ consiste à introduire dans la chambre de combustion une faible quantité de carburant qui provoque un ralentissement de la vitesse de combustion du mélange carburé introduit pendant la première injection $I_1$.

La seconde injection $I_2$ permet de retarder de quelques degrés d'angle vilebrequin la combustion complète du mélange carburé homogène, ce qui entraîne une diminution du bruit de la combustion.

On note que la première $I_1$ et la seconde $I_2$ injections suffisent à injecter la totalité du carburant nécessaire dans un cylindre pour réaliser un cycle de combustion. La quantité de carburant introduite pendant la seconde injection $I_2$ vient compléter la quantité de carburant introduite pendant la première injection $I_1$.

Sur la figure unique, on a représenté un exemple de mise en oeuvre du procédé de commande selon l'invention.

La courbe en trait continu représente la levée de l'aiguille de l'injecteur en fonction de l'angle $A_v$ de rotation du vilebrequin.

La courbe en trait discontinu représente le dégagement d'énergie $D_E$ à l'intérieur de la chambre de combustion du cylindre associé à l'injecteur mentionné précédemment, en fonction de l'angle de rotation du vilebrequin.

Le dégagement d'énergie $D_E$ est exprimé ici en kilojoules par mètre cube.

Le point mort haut du piston, à la fin de la phase de compression et au début de la phase de détente, correspond ici à 360 degrés d'angle vilebrequin.

La première injection $I_1$ est déclenchée ici au point mort haut, à 360 degrés d'angle vilebrequin, et elle se termine environ à 367 degrés.

A la fin de la première injection $I_1$, on constate le début d'un dégagement d'énergie qui est diminué, à environ 370 degrés d'angle vilebrequin, par la seconde injection $I_2$.

La seconde injection $I_2$ est plus courte que la première, puisque la quantité de carburant injecté est faible. Elle se termine ici environ à 373 degrés d'angle vilebrequin.

A la fin de la seconde injection $I_2$, la combustion $C_o$ du mélange carburé commence ce qui provoque un dégagement d'énergie très important, illustré par un pic sur la figure.

De préférence, la première injection $I_1$ doit commencer au plus tôt à 25 degrés d'angle vilebrequin avant le point mort haut, et se terminer au plus tard à 25 degrés d'angle vilebrequin après le point mort haut, ce qui permet de minimiser les émissions de polluants tels que les oxydes d'azote, les hydrocarbures imbrûlés, et les oxydes de carbone, tout en minimisant la consommation en carburant.

Le procédé selon l'invention réalise les injections de carburant et provoque la combustion du mélange carburé au voisinage du point mort haut, ce qui permet de maximiser le rendement du moteur en diminuant les pertes thermiques.

Avantageusement, la quantité de carburant injectée au cours de la seconde injection I₂, dite seconde quantité, est inférieure ou égale à 10 millimètres cube par litre de cylindrée unitaire du moteur.

Par exemple, pour une cylindrée unitaire de 0,5 litre, la seconde quantité est égale à 5 millimètres cube.

Bien entendu, la quantité de carburant injectée au cours de la première injection I₁ est égale à la quantité totale de carburant injecté pendant un cycle de combustion du cylindre moins la seconde quantité.

De préférence, la pression d'injection pendant la première injection I₁ est supérieure ou égale à 1200 bars.

Selon un mode de réalisation avantageux, la perméabilité de l'injecteur est choisie supérieure ou égale à une valeur seuil "Qh" exprimée en décimètres cube. Cette valeur Qh correspond au volume de carburant dispensée par l'injecteur lorsqu'il fonctionne à une pression d'injection de 100 bars pendant une durée de 30 secondes.

La valeur seuil de la perméabilité Qh est calculée selon la formule suivante :

$$Qh \geq \frac{K \times V_{cyl} \times P_{Spec} \times CSE}{n_{cyl} \times \rho \times d \times \sqrt{\Delta P}}$$

dans laquelle :

- "K" est une constante égale à 75,
- "$V_{cyl}$" est la cylindrée du moteur en décimètres cube,
- "$P_{Spec}$" est la puissance maximale du moteur rapportée à sa cylindrée en kilowatts par décimètre cube,
- "CSE" est la consommation spécifique du moteur dans les conditions produisant la puissance maximale en grammes par kilowattheure,
- "$n_{cyl}$" est le nombre de cylindres du moteur,
- "$\rho$" est la masse volumique du carburant en grammes par décimètre cube,
- "d" est la durée d'injection de carburant exprimée en nombre de degrés de rotation du vilebrequin du moteur, dans les conditions produisant la puissance maximale $P_{Spec}$,
- "$\Delta P$" est la pression d'injection du carburant moins la pression dans le cylindre en bars dans les conditions produisant la puissance maximale $P_{Spec}$.

On note que l'homogénéité de la formule en terme d'unités de mesure est assurée par la constante "K".

La durée d'injection "d" correspond au cas d'une phase d'injection comprenant une seule injection s'étalant sur un nombre déterminé de degrés d'angle vilebrequin. Cette valeur pourrait être exprimée en unités horaires, ce qui impliquerait une modification de la constante.

A titre d'exemple, la valeur de la perméabilité Qh doit être supérieure ou égale à environ 0,5 décimètre cube, dans les conditions suivantes :

- $V_{cyl}$ = 2 décimètres cube,
- $P_{Spec}$ = 60 kilowatts par décimètre cube,
- CSE = 250 grammes par kilowattheure,
- $n_{cyl}$ = 4,
- $\rho$ = 825 grammes par décimètre cube,
- d = 35 degrés d'angle vilebrequin lorsque le moteur tourne à 4000 tours par minute,
- $\Delta P$ = 1500 bars (pression d'injection 1600 bars, pression dans le cylindre 100 bars).

On note que le mélange carburé est formé de préférence avec un mélange d'air et de gaz brûlés recirculés, de manière à minimiser les émissions d'oxydes d'azote.

Par exemple, le mélange carburé formé après la seconde injection I₂ contient un taux de gaz brûlés recirculés supérieur ou égal à 50 pourcents.

Avantageusement, le procédé de commande selon l'invention est appliqué lorsque le moteur fonctionne à faible ou moyenne charge, un procédé de commande différent étant appliqué aux fortes charges.

**Revendications**

1. Procédé de commande d'un moteur à combustion interne à allumage par auto-inflammation d'un mélange carburé homogène, le moteur comportant au moins un cylindre dans lequel un piston se déplace entre une position de point mort bas et une position de point mort haut en délimitant une chambre de combustion de volume variable, et au moins un injecteur qui introduit le carburant directement dans la chambre de combustion du cylindre, **caractérisé en ce que**, au cours d'un cycle de combustion dans le cylindre, la quantité totale de carburant nécessaire est introduite au moyen de deux injections distinctes :

   - une première injection (I₁), qui commence au voisinage du point mort haut du piston, et qui consiste à former un mélange carburé homogène en injectant une première quantité déterminée de carburant avec une pression d'injection et une perméabilité de l'injecteur suffisantes pour former le mélange carburé homogène avant son auto-inflammation,
   - une seconde injection (I₂), qui commence au début de la combustion du mélange carburé, et qui consiste à injecter une seconde quantité déterminée de carburant ralentissant la vitesse de combustion du mélange carburé formé pendant la première injection ($I_1$).

2.  Procédé selon la revendication précédente, **caractérisé en ce que** la seconde quantité de carburant est inférieure ou égale à 10 millimètres cube par litre de cylindrée unitaire du moteur.

3.  Procédé selon l'une quelconque des revendications précédentes, **caractérisé en ce que** la pression d'injection pendant la première injection ($I_1$) est supérieure ou égale à 1200 bars.

4.  Procédé selon l'une quelconque des revendications précédentes, **caractérisé en ce que** la perméabilité de l'injecteur est supérieure ou égale à une valeur seuil "Qh" exprimée en décimètres cube et calculée selon la formule suivante :

$$Qh \geq \frac{K \times V_{cyl} \times P_{Spec} \times CSE}{n_{cyl} \times \rho \times d \times \sqrt{\Delta P}}$$

dans laquelle :

-   "K" est une constante égale à 75,
-   "$V_{cyl}$" est la cylindrée du moteur en décimètres cube,
-   "$P_{Spec}$" est la puissance maximale du moteur rapportée à sa cylindrée en kilowatts par décimètre cube,
-   "CSE" est la consommation spécifique du moteur dans les conditions produisant la puissance maximale en grammes par kilowattheure,
-   "$n_{cyl}$" est le nombre de cylindres du moteur,
-   "$\rho$" est la masse volumique du carburant en grammes par décimètre cube,
-   "d" est la durée d'injection de carburant exprimée en nombre de degrés de rotation du vilebrequin du moteur, dans les conditions produisant la puissance maximale $P_{Spec}$,
-   "$\Delta P$" est la pression d'injection du carburant moins la pression dans le cylindre en bars dans les conditions produisant la puissance maximale $P_{Spec}$.

5.  Procédé selon l'une quelconque des revendications précédentes, **caractérisé en ce que** le mélange carburé est formé avec un mélange d'air et de gaz brûlés recirculés.

6.  Procédé selon la revendication précédente, **caractérisé en ce que** le mélange carburé formé après la seconde injection ($I_2$) contient un taux de gaz brûlés recirculés supérieur ou égal à 50 pourcents.

7.  Procédé selon l'une quelconque des revendications précédentes, **caractérisé en ce que** le carburant utilisé est du type Diesel.

EP 1 653 068 A2

**Figure unique**